# EUROPEAN PATENT APPLICATION

(11) **EP 1 953 617 A2**
(43) Date of publication of application: **06.08.2008**
(21) Application number: 08001341.0
(22) Date of filing: 24.01.2008
(51) Int. Cl.: G05B 23/02

(54) **Vehicle diagnosis system**

(30) Priority: 26.01.2007 JP 2007015869
(71) Applicant: Denso Corporation, Kariya-city, Aichi-pref. 448-8661 (JP)
(72) Inventor: Kondo, Nobuyuki c/o Denso Corporation, Aichi-pref., 448-8661 (JP); Kamiya, Kenji c/o Denso Corporation, Aichi-pref., 448-8661 (JP); Yamada, Mitsuo c/o Denso Corporation, Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

A vehicle diagnosis system is configured to instruct vehicle operations required to finish a diagnosis without any increase in the storage capacity of an on-vehicle electronic control unit (31). When a repair person requests results of a self-diagnosis of a vehicle (30) executed by an ECU (31) using a diagnosis terminal (21), a management server (10) acquires instruction texts for the vehicle operations required to finish the diagnosis from a by-type diagnosis process database (11) at a remote management station (C) and causes the diagnosis terminal (21) to display the texts. The repair person operates the vehicle (30) according to the instruction texts displayed on the diagnosis terminal (21) to finish the self-diagnosis for which the request for diagnosis results has been made.

## Description

The present invention relates to a vehicle diagnosis system for diagnosing a vehicle using a diagnosis terminal connectable to the vehicle.

A vehicle has a self-diagnosis function, and the presence of any abnormality of each part of the vehicle is automatically checked when the vehicle is in or out of operation based on results of detection by various sensors provided in the vehicle. At a repair shop, a diagnosis operation is carried out on vehicles utilizing the self-diagnosis function of the vehicles themselves to check operations and functions of repaired or replaced parts. Such a diagnosis operation on a vehicle is carried out by connecting a diagnosis terminal (checker) to the vehicle. Specifically, the diagnosis terminal is connected to the vehicle by mounting a harness of the diagnosis terminal to a connector of an on-vehicle electronic control unit mounted on the vehicle. A repair person operates the diagnosis terminal to request for results of a diagnosis of a repaired or replaced part, the diagnosis results of the part are read from the on-vehicle electronic control unit and displayed on a screen of the diagnosis terminal.

When the self-diagnosis has not been completed for the part and no diagnosis result has been recorded in the on-vehicle control unit yet, the repair person performs required operations on the vehicle with reference to a service manual to satisfy a condition for the execution of the diagnosis and thereafter requests for diagnosis results again. The service manual is a document provided by a vehicle manufacturer to show a condition for the execution of each item of self-diagnosis and steps for vehicle operations to be taken to satisfy the condition. However, it is troublesome for the repair person, a vehicle mechanic, to carry out the operations with reference to such a service manual.

In US Patent No. 6,449,559 (JP 2000-339018A), a proposal has been made on a technique for facilitating diagnosis operations carried out by a repair person. The technique facilitates diagnosis operations carried out by the repair person associated with a diagnosis of leakage from an evaporated fuel processing device and a diagnosis of cleaning performance of an exhaust gas cleaner.

Through such a diagnosis, a vehicle is determined as normally operating or having any abnormality based on results of detection performed by on-vehicle sensors when the vehicle is driven according to a predetermined diagnostic traveling pattern. The diagnostic traveling pattern is specified in terms of traveling speed and traveling time and is stored in advance in an on-vehicle electronic control unit. The on-vehicle electronic control unit compares the diagnostic traveling pattern stored therein with an actual traveling pattern of the vehicle. When the patterns agree with each other, a determination is made as described above, and results of the determination are recorded. Therefore, a repair person is required to drive the vehicle actually according to the predetermined traveling pattern to conduct a diagnosis as described above.

According to the above technique, a diagnosis terminal reads the data of the diagnostic traveling pattern from an on-vehicle electronic control unit and receives an actual traveling pattern of the vehicle. The diagnosis terminal sequentially outputs travel instructions according to the data of the diagnostic traveling pattern thus received on a screen thereof and checks whether the vehicle travels according to the diagnostic traveling pattern. If not, a reset instruction is output. Thus, the repair person can drive the vehicle according to the diagnostic traveling pattern by driving the vehicle according to the instructions displayed on the screen of the diagnosis terminal, and the diagnosis can be easily completed.

As thus described, US Patent No. 6,449,559 (JP 2000-339018A), instructions for vehicle operations required for finishing a diagnosis or satisfying a condition for the execution of a diagnosis are given based on data read from an on-vehicle electronic control unit. However, this approach can be adopted only for the reason described below. The diagnosis of leakage from an evaporated fuel processing device or the diagnosis of cleaning performance of an exhaust gas cleaner is carried out based on the fulfillment of a condition for execution specified simply in terms of traveling speed, i.e., a control parameter which can be directly manipulated. Therefore, information on the condition for the execution of the diagnosis can be directly used as information for instructing steps for operating the vehicle to satisfy the condition.

On the contrary, most of vehicle diagnoses are executed upon fulfillment of conditions specified in terms of control parameters which cannot be directly manipulated by a repair person such as the temperature of engine cooling water and air-fuel ratio. In such cases, when information available on a diagnosis is only execution conditions stored in an on-vehicle electronic control unit, the information is obviously unsatisfactory to provide sufficient instructions for vehicle operations required to enable the diagnosis. Therefore, in order to provide sufficient instructions for vehicle operations required to finish the diagnosis, information required to provide such instructions must be stored in the on-vehicle electronic control unit in addition to the information which is required for the execution of the diagnosis itself. When such instructions must be provided for all items to be subjected to diagnosis, the on-vehicle electronic control unit must have a large storage capacity which is difficult to provide.

The invention therefore has an object to provide a vehicle diagnosis system in which instructions for vehicle operations to be performed to finish a diagnosis can be provided without any increase in the storage capacity of an on-vehicle electronic control unit.

According to the present invention, a vehicle diagnosis system for diagnosing a vehicle using a diagnosis terminal connected to the vehicle, including a diagnosis process database having information on an instruction for a vehicle operation required to finish the diagnosis stored therein and provided outside the vehicle and an instruction information output unit for acquiring the instruction information from the diagnosis process database and outputting the information.

In the vehicle diagnosis system having the above configuration, even when a diagnosis execution condition is not satisfied for a diagnosis for which a request for diagnosis results has been made or a diagnosis which is to be executed, information on an instruction required for a vehicle operation to be performed to finish the diagnosis is output, and the diagnosis can be finished by executing the vehicle operation according to the instruction information. The vehicle diagnosis system acquires such information on an instruction for a vehicle operation from the diagnosis process database provided outside the vehicle. That is, information on an instruction for a vehicle operation to be performed to finish a diagnosis and, more specifically, information on steps of a vehicle operation to be performed to satisfy a condition for execution of a diagnosis or to execute the diagnosis is stored in a database provided outside the vehicle instead of storing it in the vehicle (on-vehicle electronic control unit). When the diagnosis is carried out, the instruction information is acquired from the database outside the vehicle and output to the diagnosis terminal or the vehicle to notify the repair person of the vehicle operation to be performed to finish the diagnosis or to instruct the repair person to perform the operation. Therefore, an instruction for a vehicle operation to be performed to finish a diagnosis can be given without any increase in the storage capacity of an on-vehicle electronic control unit.

The above and other objects, features and advantages of the present invention will become more apparent from the following detailed description made with reference to the accompanying drawings. In the drawings:
Fig. 1 is a block diagram schematically showing a first embodiment of a vehicle diagnosis system according to the invention;
Fig. 2 is a table schematically showing a data structure of a vehicle ID/vehicle type association table provided in a by-type diagnosis process database of the vehicle diagnosis system;
Fig. 3 is an illustration schematically showing a data structure of by-type specification master data tables in the by-type diagnosis process database;
Fig. 4 is an illustration schematically showing a data structure of by-type execution condition master data tables in the by-type diagnosis process database;
Fig. 5 is an illustration schematically showing a data structure of a check item master data table in the by-type diagnosis process database;
Fig. 6 is an illustration schematically showing a data structure of a by-vehicle diagnosis record database used in the vehicle diagnosis system;
Fig. 7A is a sequence diagram showing a flow of operational steps in a first half of a first case of a diagnosis operation associated with readout of results of a self-diagnosis in the vehicle diagnosis system;
Fig. 7B is a sequence diagram showing a flow of operational steps in a second half of the first case of the diagnosis operation;
Fig. 8 is an illustration of an example of a display screen showing that "execution condition is not satisfied" and showing check items which are untrue (not satisfied), displayed on a diagnosis terminal of the vehicle diagnosis system;
Fig. 9 is an illustration of an example of a display screen showing instruction texts for manual operations displayed on the diagnosis terminal;
Fig. 10 is an illustration of an example of a display screen showing that "automatic operation is permitted" displayed on the diagnosis terminal;
Fig. 11 is a sequence diagram showing a flow of operational steps in a second case of the diagnosis operation associated with readout of results of a self-diagnosis in the vehicle diagnosis system;
Fig. 12 is a sequence diagram showing a flow of operational steps in a third case of the diagnosis operation;
Fig. 13 is a sequence diagram showing a flow of operational steps in a fourth case of the diagnosis operation;
Fig. 14 is an illustration of an example of a display screen showing that "execution condition is satisfied" and showing a waiting time, displayed on the diagnosis terminal of the vehicle diagnosis system;
Fig. 15 is a sequence diagram showing a flow of operational steps in a fifth case of the diagnosis operation;
Fig. 16 is a flow chart of a station-side diagnosis results readout routine executed by a management server in the vehicle diagnosis system;
Fig. 17 is a flow chart of an instruction information output routine executed by the management server;
Fig. 18 is a flow chart of a terminal-side diagnosis results readout routine executed by the diagnosis terminal;
Fig. 19 is a flow chart of a vehicle-side diagnosis results readout routine executed by an ECU;
Fig. 20 is a sequence diagram showing a flow of operational steps of a diagnosis operation associated with the execution of an active test in the vehicle diagnosis system; and
Fig. 21 is a block diagram schematically showing a second embodiment of a vehicle diagnosis system according to the invention.

### (First Embodiment)

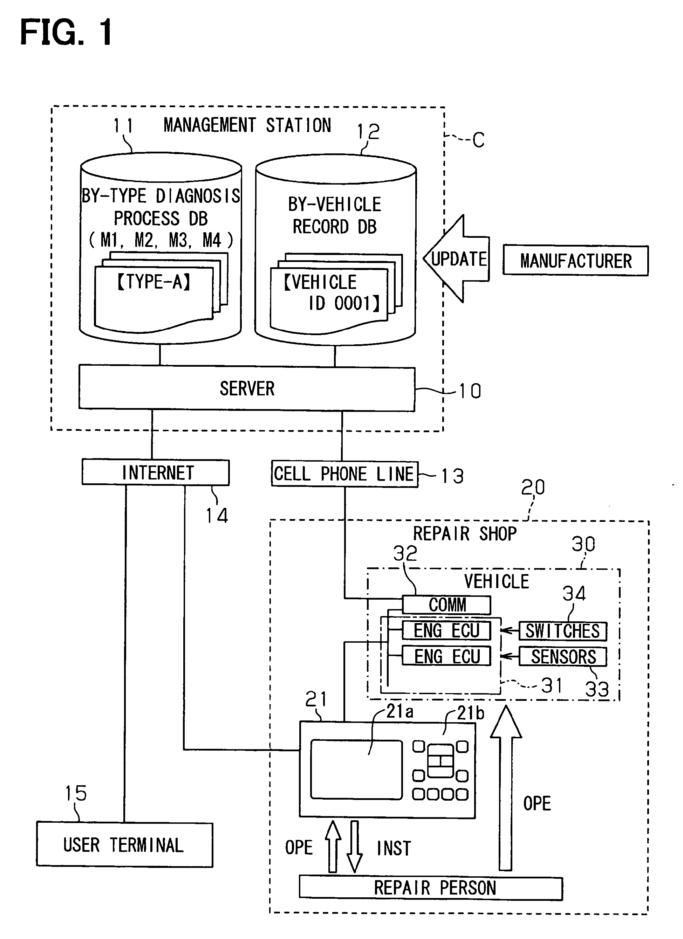

A first embodiment of a vehicle diagnosis system is shown in Figs. 1 to 20. This vehicle diagnosis system provides a function of outputting instruction information for notifying a repair person of vehicle operations to be performed to finish a vehicle diagnosis operation or instructing an on-vehicle electronic control unit (ECU) to execute the required vehicle operations, when the diagnosis has not been finished because a condition for execution of the diagnosis is not satisfied. The instruction information thus output is stored in a diagnosis process database provided outside the vehicle to allow the instructions for the vehicle operations required to finish the diagnosis to be provided without any increase in the storage capacity of the on-vehicle electronic control unit.

Referring first to Fig. 1, a remote management station C is operated by a vehicle manufacturer, and the station C provides each vehicle under the management of the same with services such as driving state monitoring and provision of various types of information. A management server 10 for processing various types of data to provide such services is provided at the remote management station C. Two databases i.e., a by-type diagnosis process database 11 and a by-vehicle diagnosis record database 12 are connected to the management server 10. In this vehicle diagnosis system, the management server 10 serves as an instruction information output unit as described above for acquiring information on instructions for vehicle operations to be performed to complete a diagnosis from the by-type diagnosis process database 11 and outputting the information.

The management server 10 can be connected to an on-vehicle electronic control unit (ECU) 31 of each vehicle 30 under the management of the system through wireless communication using a cellular phone line 13. The vehicle 30 incorporates a communication apparatus 32 for performing such wireless communication, and the apparatus is connected to the ECU 31. The ECU 31 includes a plurality of electronic control units such as an engine ECU and an ECT ECU, and these ECUs are connected to each other through an in-vehicle LAN. The ECU 31 is connected with various sensors 33 (such as a water temperature sensor, a throttle sensor, an acceleration sensor, a traveling speed sensor, and an engine speed sensor) and various switches 34 (such as an ignition switch, a shift position switch, and an air-conditioner switch) provided at various parts of the vehicle.

The management server 10 is connected to diagnosis terminals 21 provided at a repair shop 20 in various locations through internet 14. A diagnosis terminal 21 is connected to the ECU 31 of a vehicle 30 to be diagnosed, and a repair person operates the diagnosis terminal 21 to make a request for output of diagnostic results from the vehicle 30, which allows the repair person to check the present condition of driving of the vehicle 30 (present values of sensors, counters, and switches). The diagnosis terminal 21 has a monitor (display screen) 21a and an operation section 21b of switches or buttons.

The diagnosis operation on the vehicle 30 using such a vehicle diagnosis system is executed by a repair person operating the diagnosis terminal 21 connected to the ECU 31 to specify items to be diagnosed and to make a request for readout of diagnosis results or execution of a diagnosis. There are two types of diagnostic activities which can be executed on specified items of diagnosis. Specifically, the activities are the readout of results of a self-diagnosis and the execution of an active test.

A self-diagnosis is automatically executed by the ECU 31 without any particular command from outside as long as the vehicle 30 is in a driving state satisfying a condition for execution of the same. When the condition for execution is satisfied, the ECU 31 repeats the diagnosis on a predetermined cycle and records and updates results of each cycle of the diagnosis. A condition for execution of a self-diagnosis is set for each item of the diagnosis. For example, the condition for execution of a self-diagnosis to check the operation of a traveling speed sensor is that all of the following items are true (satisfied). That is, the ignition switch is ON, and the engine is in operation; the shift range is other than "P" or "N"; and the engine speed is sufficiently high, which means that the vehicle is traveling. When such a condition for execution is satisfied during the operation of the vehicle, the ECU 31 checks whether the traveling speed sensor is normally functioning based on whether there is input of a traveling speed pulse from the travel speed sensor and records the result of the check.

When a part is repaired or replaced, the repair person runs a self-diagnosis of the part and verifies the operation of the part by reading results of the diagnosis from the ECU 31. When a part of a vehicle is repaired or replaced, the memory of the ECU 31 is once cleared. Therefore, it can be checked whether a self-diagnosis has been executed or not after the repair or replacement of the part based on whether diagnosis results are recorded in the ECU 31 or not.

An active test is executed by the ECU 31 forcibly driving an actuator in the vehicle according to an instruction from outside (e.g., an instruction from the diagnosis terminal 21) to establish a situation required for the test automatically. The repair person monitor 21as the condition of driving of the vehicle to diagnose the vehicle with the actuator in the vehicle forcibly driven as thus descried by running the active test. Such an active test is different from a self-diagnosis as described above in that it is not executed without an instruction from outside even if the condition for execution is satisfied. For example, in an active test for checking the operation of an electronically controlled throttle, the throttle motor is driven with the target opening angle of the throttle valve set at a specified value, and it is checked whether the throttle is properly operating or not based on whether the throttle valve opening angle agrees with the specified target opening angle or not. Such an active test can be executed when a condition for execution set for each item of the active test is satisfied. For example, the condition for execution of the active test for checking the operation of the electronically controlled throttle is that all of the following items are true. That is, the ignition switch is ON, and the engine is in operation; the vehicle speed is "0", and the vehicle is therefore parked; the shift range is "P" or "N", and the accelerator pedal is pressed down in a certain amount or more.

A detailed description will now be made on the two databases provided in the vehicle diagnosis system as thus described, i.e., the by-type diagnosis process database 11 and the by-vehicle diagnosis record database 12.

Information on instructions for vehicle operations required to finish diagnoses is stored in the by-type diagnosis process database 11. In the vehicle diagnosis system, the by-type diagnosis process database 11 includes four types of data tables, i.e., a vehicle ID/vehicle type association table M1, by-type specification master data table M2, by-type execution condition master data table M3, and a check item master data table M4.

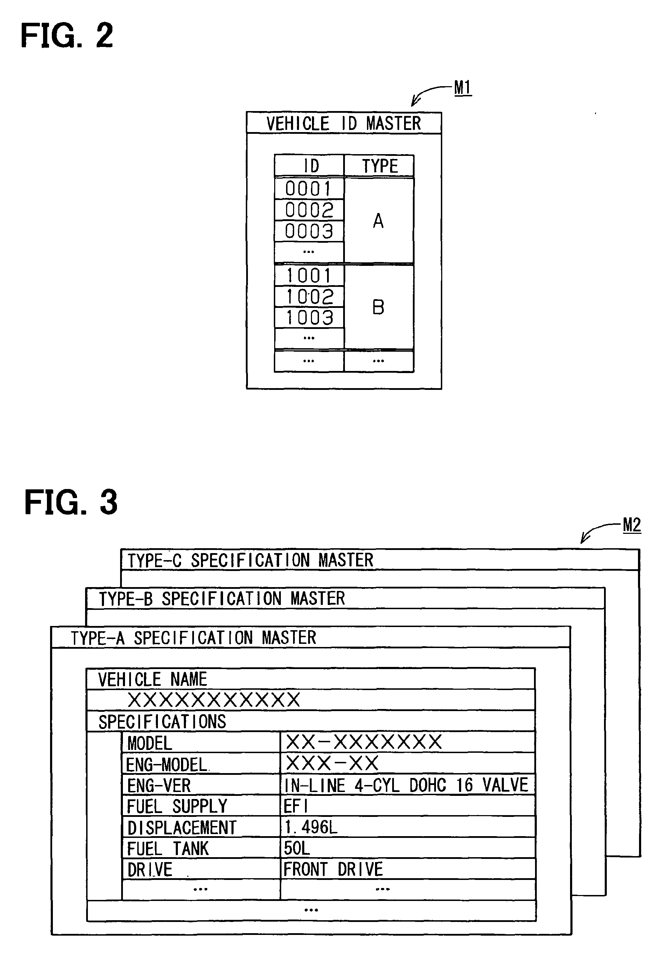

As shown in Fig. 2, the vehicle ID/vehicle type association table M1 is a data table having key entries for "vehicle IDs" which are identification codes for individual vehicles and data entries for "vehicle type codes" each of which is unique to a vehicle type. This table is used for identifying a vehicle type from a vehicle ID. In this case, a vehicle identification number (VIN) is used as a vehicle ID. A VIN is marked on the frame of the vehicle 30 and recorded in the ECU 31.

As shown in Fig. 3, the by-type specification master data table M2 are data tables whose key entries are the "vehicle type codes" and whose data entries are "vehicle name" and items of vehicle specifications ("vehicle model", "engine model", "engine type", "fuel supply (type)", "total displacement", "fuel tank capacity", and "driving method"). The by-type specification master tables M2 as thus described are used for checking the specifications of a vehicle from the vehicle type code of the same. Information on the specifications of vehicle types stored in the by-type specification master tables M2 can be referred to from the diagnosis terminal 21.

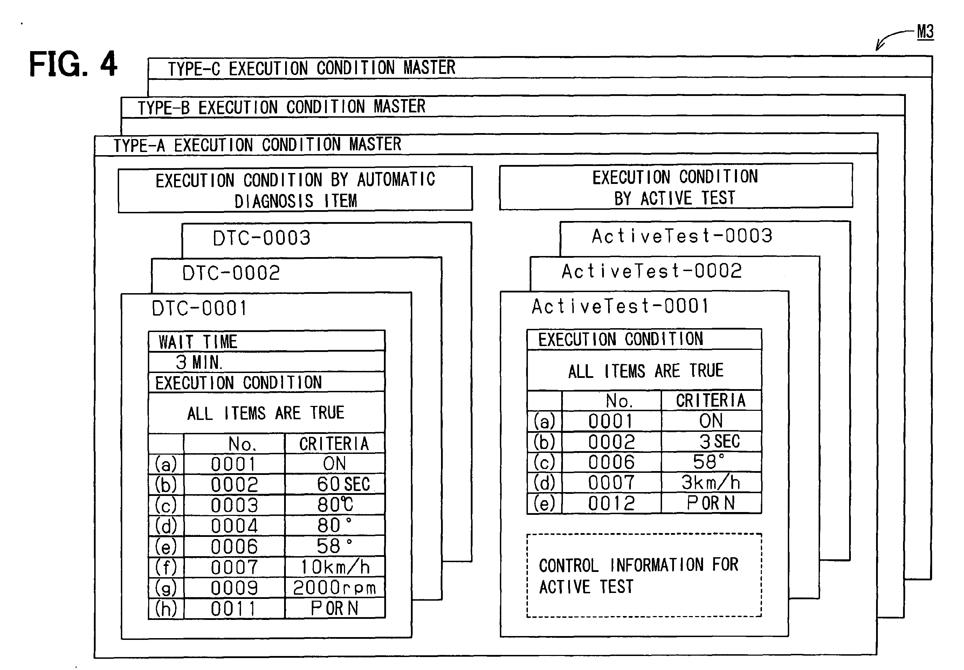

As shown in Fig. 4, a by-type execution condition master data table M3 is a data table whose key entries are "diagnosis codes (such as "DTC-0001")" for self-diagnoses and "active test codes (such as "ActiveTest-0010")" for active tests and whose data entries are pieces of information on conditions for execution of a self-diagnosis and an active test of each item. Such a by-type execution condition master data table M3 is separately provided for each vehicle type. On a by-type execution condition master data table M3, information on an execution condition is represented by identification codes (item numbers) of check items forming the execution condition and criteria (thresholds) used for the checking. Information on a condition for execution of the active test includes control information for executing the active test according to a preset procedure.

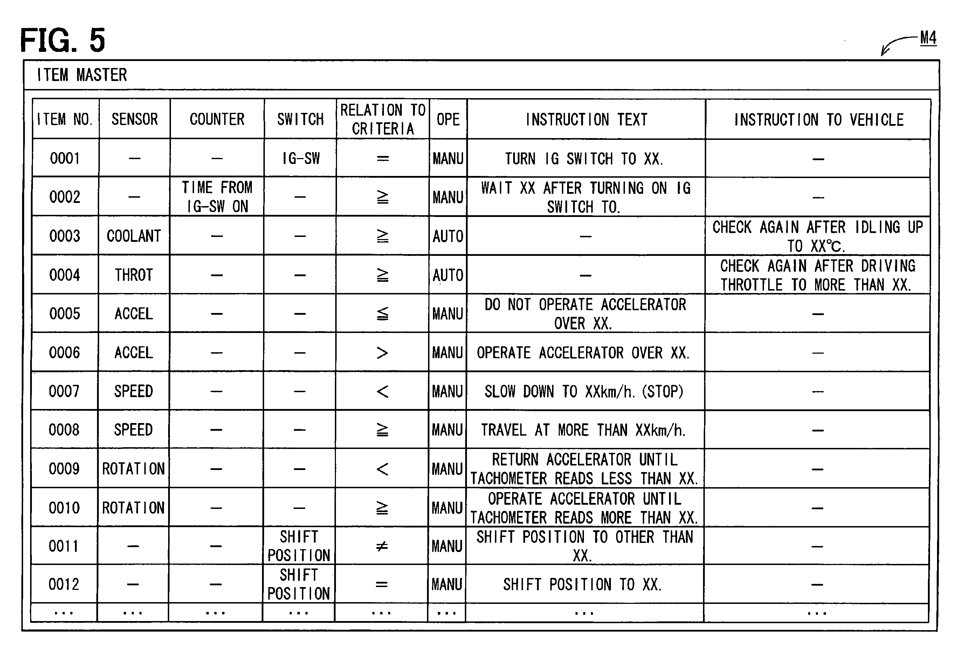

Information on specific contents of each of the check items having item numbers is stored in the check item master table M4. Specifically, as shown in Fig. 5, the check item master data table M4 is configured as a data table whose key entries are the "item numbers" of the check items and data entries "sensor", "counter", "switch", "relation to criteria", "operation method", "instruction text", and "instruction to vehicle". Details of the data entries of such a check item master data table M4 are as follows.

The data entries "sensor", "counter", and "switch" indicate the types of a sensor, a counter, and a switch which provide control parameters to be used for checking whether a check item of interest is true or not.

The data entry "relation to criteria" shows a relationship between a control parameter and a criterion when a check item of interest is determined to be true. For example, when this data entry has a value "=", it means that a check item of interest is true when a control parameter specified in the data entry "sensor", "counter" or "switch" agrees with a criterion specified in a by-type execution condition master data table M3 as described above. When this data entry has a value "≥", it means that the check item of interest is true when the control parameter is equal to or greater than a criterion. A specific example is discussed here. The check item master data table M4 shown in Fig. 5 shows that the value of a water temperature sensor (engine cooling water temperature) must be equal to or higher than "XX (criterion)" in order that the check item having an item number "0003" is determined to be true.

The data entry "operation method" shows which of "manual" and "automatic" vehicle operations is chosen for a check item of interest. What is stored in the data entry "instruction text" is text data representing an instruction for notifying a repair person of steps of a manual vehicle operation to be performed for a check item of interest to become true. In the vehicle diagnosis system of the present embodiment, text data in a plurality of languages (e.g., Japanese and English) are stored in the "instruction text" entry to allow a repair person to select a language to use.

What is stored in the data entry "instruction to vehicle" is control information for instructing the ECU 31 to perform an automatic operation of the relevant vehicle required for a check item of interest to become true. Although the values in the data entry "instruction to vehicle" are shown as texts indicating steps of vehicle operations in Fig. 5, what is actually stored in this data entry is control information for instructing vehicle operations performed according to steps represented by such texts.

When information in the by-type diagnosis database 11 is used, a "vehicle ID" and a "diagnosis code" or an "active test code" may be specified to acquire information on instructions for vehicle operations required to finish a diagnosis designated by the codes. Specifically, the management server 10 acquires instruction information as described below. First, the management server 10 refers to the vehicle ID/vehicle type association table M1 using a "vehicle ID" that the server has received to find the "vehicle type code" associated with the vehicle to be diagnosed. The management server 10 refers to the by-type execution condition master data table M3 associated with the "vehicle type code" thus found according to a "diagnosis code" or "active test code" that the server has received, whereby the "item numbers" of check items forming the condition for execution of the diagnosis are found. Then, the management server 10 refers to the check item master data table M4 according to each of the "item numbers" thus found to acquire information on an instruction for a vehicle operation required for the check item to become true.

Data in the by-type diagnosis process database 11 as described above are managed by the vehicle manufacturer. Specifically, the vehicle manufacturer makes additions and updates to data stored in the data tables of the by-type diagnosis process database 11 as occasion demands because of the addition of a new vehicle type or changes in the specification of an existing vehicle type.

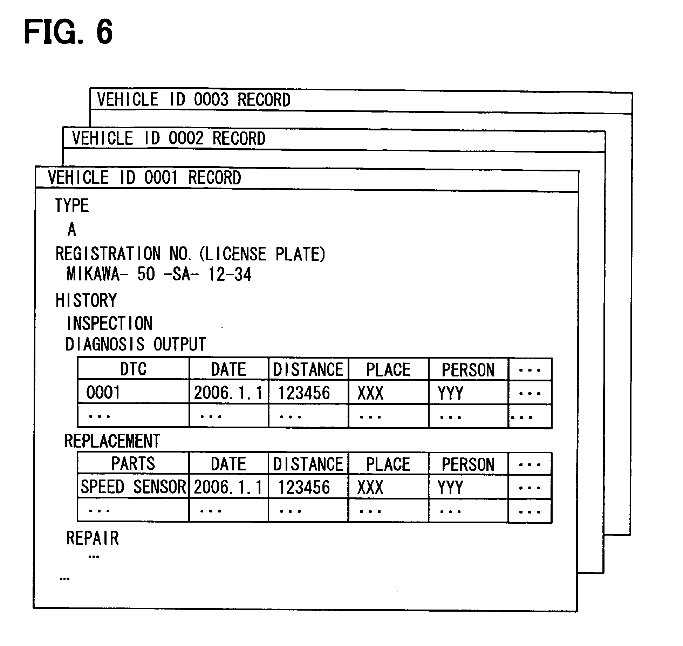

Information on records of each vehicle managed by the system is stored in the by-vehicle diagnosis record database 12. Specifically, as shown in Fig. 6, pieces of information associated with each "vehicle ID", e.g., the "vehicle type", "registration number (the number on the license plate)", "history of parts replacement", "history of repairs", and "inspection results" are stored in the by-vehicle diagnosis record database 12 as diagnosis record information of each vehicle. Such contents of the diagnosis record information can be checked by the repair person using the diagnosis terminal 21 for the person's reference in repairing or diagnosing a vehicle. The by-vehicle diagnosis record database 12 can be accessed from a computer terminal 15 of a vehicle owner (user) through the internet 14, and the user can check the contents of the diagnosis record information of his or her vehicle using the computer terminal 15.

### (Readout of Self-Diagnosis Results)

Described next are diagnostic operations which take place when a request for readout of results of a self-diagnosis is made in the vehicle diagnosis system having the above configuration. The following description addresses diagnosis operations in five cases, i.e., first to five cases which are different from each other in that the need for vehicle operations to complete a diagnosis depends on the cases and in that types of vehicle operations are different between the cases even when they are required.

### [First Case]

The first case represents situations wherein both manual and automatic operations are required.

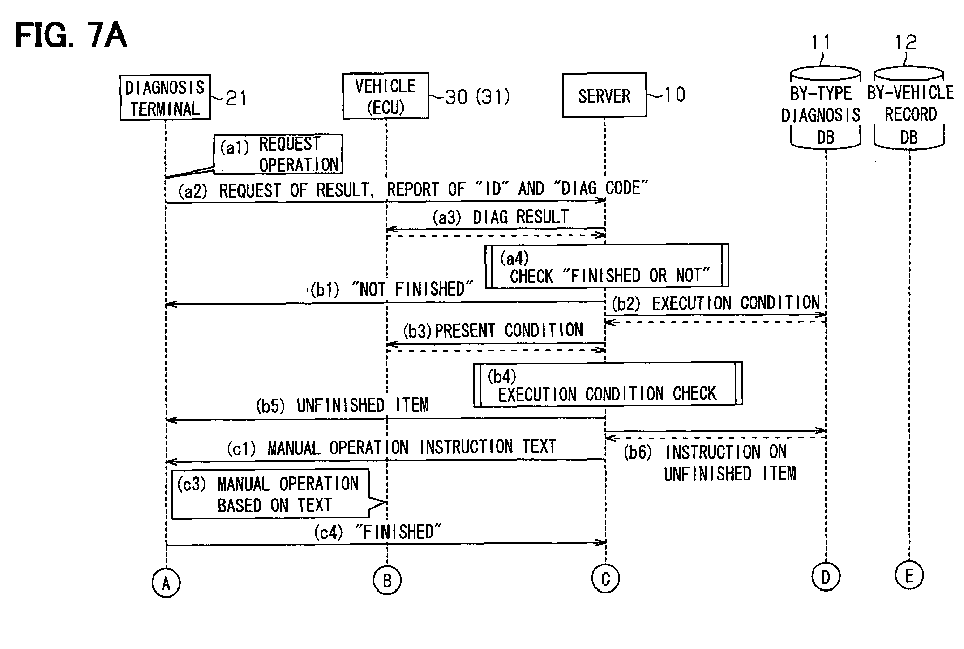

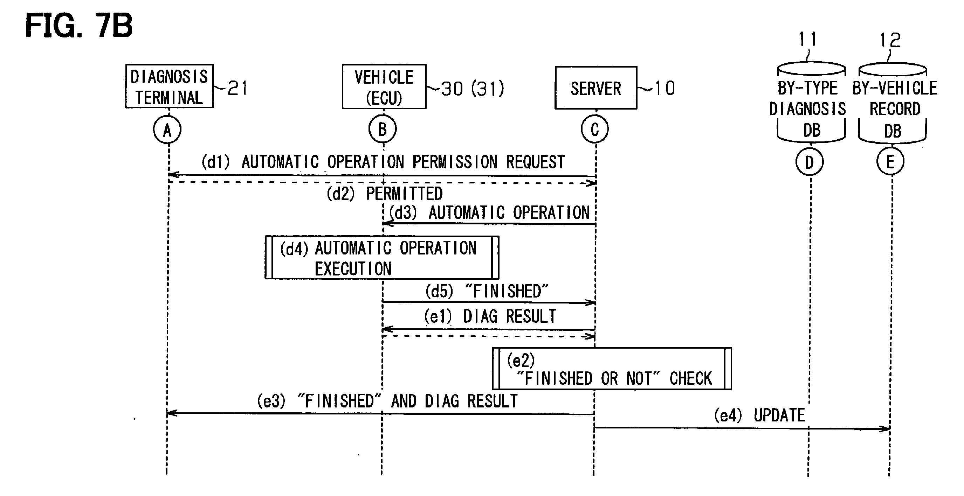

Figs. 7A and 7B show a sequence of diagnostic operations in a case wherein both of manual and automatic operations of the vehicle 30 are required to finish a diagnosis of the vehicle or to satisfy the condition for execution of a self-diagnosis of the vehicle. As shown in Fig. 7A, the diagnosis operation is first started when a repair person operates the diagnosis terminal 21 to specify a diagnosis code to make a request for readout of results of the self-diagnosis (a1). As a result of this operation, a request for readout of diagnosis results is advised along with the specified diagnosis code from the diagnosis terminal 21 to the management server 10 (a2). At this time, the management server 10 is also notified of the vehicle ID that the diagnosis terminal 21 has read from the ECU 31.

When this notice is received, the management server 10 accesses the ECU 31 of the vehicle 30 associated with the vehicle ID advised, reads data of self-diagnosis results of the item associated with the diagnosis code advised (a3), and checks whether the diagnosis has been finished or not based on whether the diagnosis results have already been recorded or not (a4).

In this first case, it is determined that the diagnosis has not been finished at this stage. In this case, the management server 10 notifies the diagnosis terminal 21 of the fact that the diagnosis has not been finished and causes the monitor 21a of the terminal 21 to display a message indicating the fact (b1), that is, not finished yet. Then, the management server 10 refers to the by-type diagnosis process database 11 to acquire information on the condition for execution of the self-diagnosis of the vehicle type and items associated with the vehicle ID and the diagnosis code advised (b2).

For example, the acquisition of information on the execution condition will now be described on an assumption that the vehicle ID and the diagnosis code advised are "0001" and "DTC-0001", respectively. Then, the management server 10 first refers to the vehicle ID/vehicle type association table M1 (Fig. 2) based on the vehicle ID advised and finds that the vehicle code (model) of the vehicle to be diagnosed is "A". Then, reference is made to the by-type execution condition master data table M3 (Fig. 4), and the server finds from the table having the vehicle code "A" that check items forming the execution condition for the diagnosis having the diagnosis code "DTC-0001" have item numbers "0001" to "0004", "0006", "0007", "0009", and "0011". At this time, the management server 10 also acquires criteria for the check items. Thereafter, the management server 10 refers to the check item master data table M4 (Fig. 5) to find specific contents of the check items having the above-listed item numbers. For example, it is found that the item number "0001" represents a check item which is determined to be true when the ignition (IG) switch has a value in agreement with a specified criterion ("ON" or "OFF") and that the criterion is specified as "ON" in this case. Thus, the management server 10 can find that the execution condition for the self-diagnosis for which a request for diagnosis results have been made is that all of check items "a" to "h" shown below are determined to be true at the same time. Referring to the check item master data table M4 shown in Fig. 5, it will be understood that the data entries "operating method" associated with the check items "c" and "d" among the check items "a" to "h" are specified as "automatic" and that the data entries "operating method" associated with the other items are specified as "manual".

### <Execution Condition of Vehicle Type A Diagnosis Code DTC-0001>

"a": The ignition switch is "ON".
"b": "60 seconds" or more have passed after the ignition switch was turned on.
"C": The value of the water temperature sensor (engine cooling water temperature) is "80°C" or more.
"d": the value of the throttle sensor (throttle opening angle) is "80°" or more.
"e": The value of the acceleration sensor (the amount of accelerator operation) is "58°" or more.
"f": The value of the traveling speed sensor (traveling speed) is less than "10 km/h".
"g": The value of the NE sensor (engine revolution speed) is less than "2000 rpm".
"h": The shift position is in a range other than "P or N".

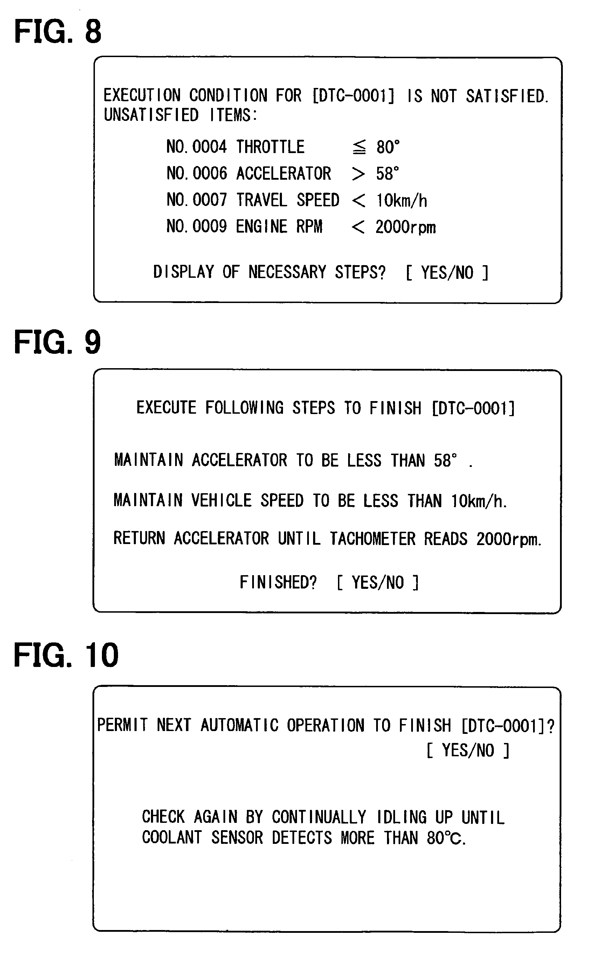

Based on the execution condition information thus acquired, the management server 10 checks a control parameter (the value of a sensor, counter, or switch) to be used for checking whether each of the check items forming the execution condition is true or not and acquires the present value of the control parameter (b3). The management server 10 checks whether each of the check items is true or not based on the present value of the control parameter thus acquired. It is thus checked whether the condition for execution of the diagnosis is satisfied or not (b4). In the first case, it is determined at this stage that "the execution condition is not satisfied". Then, the management server 10 notifies the diagnosis terminal 21 of the fact that "the execution condition is not satisfied" and the "check items which are untrue" (b5). In response to this notice, as shown in Fig. 8 by way of example, a message indicating that "the execution condition is not satisfied" and a list of the check items which are untrue are displayed on the monitor 21a of the diagnosis terminal 21. In the example of a screen display in Fig. 8, the check items having item numbers "0004", "0006", "0007", and "0009" (the items "d", "e", "f", and "g" shown above) are shown as being untrue among the check items for the execution condition of the self-diagnosis having the diagnosis code "DTC-0001".

Further, the management server 10 acquires information on an instruction for a vehicle operation required for each of the check items identified as untrue to be made true from the check item master data table M4 in the by-type diagnosis process database 11 (b6). Specifically, for a check item specified as "manual" in the associated data entry "operating method" of the check item master data table M4, the value in the associated data entry "instruction text" is acquired. For a check item specified as "automatic", the value in the associated data entry "instruction to vehicle" is acquired.

The management server 10 notifies the diagnosis terminal 21 of the "instruction text" for the check item which is untrue and for which "manual" is specified in the data entry "operating method" (c1) and causes the terminal to display the text on the monitor 21a thereof. Fig. 9 shows an example of such a screen display on the diagnosis terminal 21. In the example of this screen display, the screen displays instruction texts for manual operations to be performed for the check items "e", "f", and "g" among the check items "a" to "h" forming the execution condition for the self-diagnosis having a diagnosis code "DTC-0001" described above. The repair person performs required manual operations of the vehicle 30 according to the instruction texts displayed (c3). When the required manual operations are finished, the repair person notifies the management server 10 that "the operations are finished" through the diagnosis terminal 21 (c4).

As shown in Fig. 7B, upon receipt of the notice indicating that "the operations are finished", the management server 10 requests the diagnosis terminal 21 to give "permission for execution of an automatic operation" (d1). Upon receipt of this request, a selection screen for granting (permitting) or negating (inhibiting) execution of an automatic operation is displayed on the monitor 21a of the diagnosis terminal 21 as shown in Fig. 10 by way of example. In the example of a screen display shown in Fig. 10, a text is displayed to prompt the operator to select "YES" or "NO" representing whether to permit an automatic operation for the check item "d" (execution of an operation of driving the throttle motor to achieve a throttle opening angle of 80° or more and thereafter checking the item again) or not.

When the repair person operates the diagnosis terminal 21 to select "YES" at this time, the management server 10 is notified of "the permission for execution of an automatic operation" (d2). Upon receipt of the notice of the permission for execution of an automatic operation, the management server 10 instructs the ECU 31 to execute a required automatic operation based on control information stored in the data entry "instruction to vehicle" associated with a check item which is untrue and for which "automatic" is specified in the data entry "operating method" in the check item master data table M4 (d3). For example, when the check item "d" of the condition for execution of the self-diagnosis having the diagnosis code "DTC-0001" is untrue, the ECU 31 is instructed to drive the throttle motor so as to achieve a throttle opening angle of 80° or more and to re-execute the checking thereafter. The ECU 31 executes the automatic operation according to the instruction (d4). When the operation is finished, the ECU 31 notifies the management server 10 of the fact that "the operation is finished" (d5).

When all manual and automatic operations of the vehicle 30 required to finish the diagnosis are thus finished, the management server 10 reads "diagnosis results" from the ECU 31 (e1) to check whether the diagnosis has been finished or not again (e2). If the diagnosis has been finished, the management server 10 notifies the diagnosis terminal 21 of the acquired diagnosis results (e3) to display the diagnosis results on the monitor 21a. The management server 10 adds the diagnosis results to the diagnosis record information of the vehicle of interest in the by-vehicle diagnosis record database 12 (e4).

When the diagnosis has not been finished yet at this time again, the management server 10 notifies the diagnosis terminal 21 of the fact that "the diagnosis is not finished" to cause the terminal 21 to display a message indicating the fact on the monitor 21a thereof. In this case, the repair person executes the diagnosis operation from the beginning again. Such re-execution of the diagnosis operation may be automatically carried out by the management server 10. In this case, the sequence of operations from notifying the diagnosis terminal 21 that "the diagnosis is not finished" (b1) is repeated until the diagnosis is finished.

### [Second Case]

The second case represents situations wherein only manual operations are required.

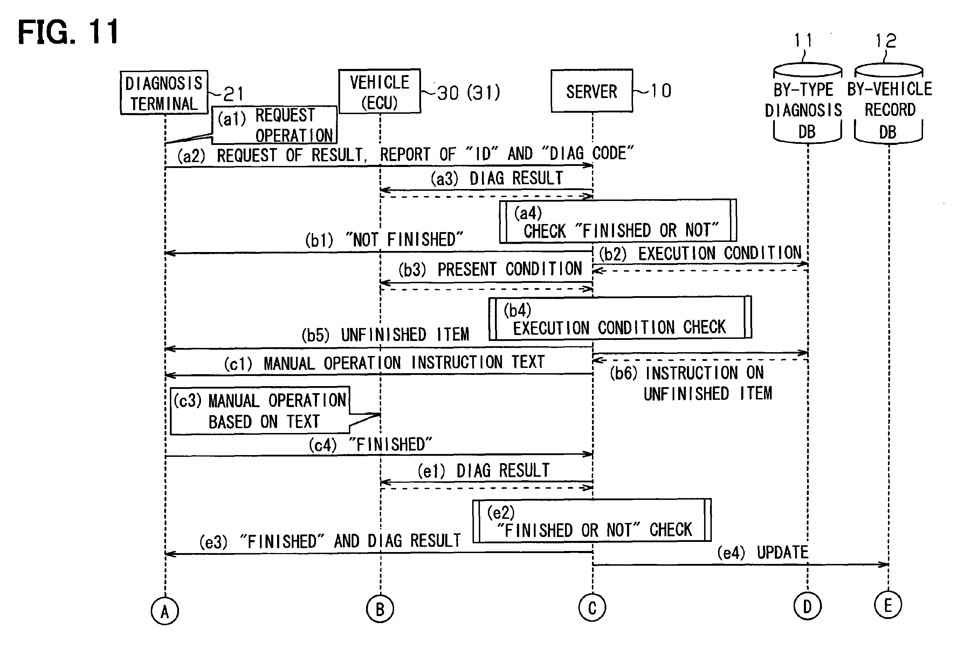

This sequence of diagnosis operations is shown in Fig. 11, and performed when only manual operations are required to finish a self-diagnosis. Situations categorized as the second case includes a situation in which all check items specified as requiring an automatic operation among check items of the execution condition of a diagnosis have been determined to be true and in which only check items specified as requiring a manual operation have been determined to be untrue, and a situation in which all of check items of the execution condition of a diagnosis are specified as requiring a manual operation. A diagnosis operation in the second case is carried out in the same manner as that in the first case except that the operation omits the sequence (steps (d1) to (d5)) associated with an instruction given to the vehicle to request an automatic operation because such an instruction is not required.

### [Third Case]

The third case represents situations in which only automatic operations are required.

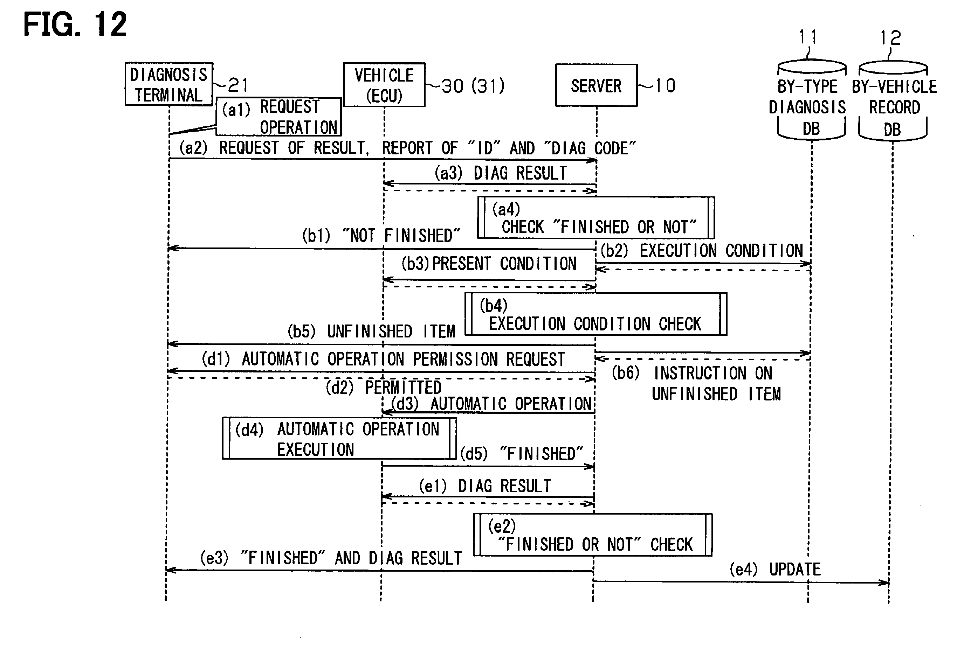

This sequence of diagnostic operations is shown in Fig. 12 and performed in a situation in which only automatic operations are required to finish a self-diagnosis. The third case is different from the second case in that it represents a situation in which all check items specified as requiring a manual operation among items of the execution condition of a diagnosis have been determined to be true and in which only check items specified as requiring an automatic operation have been determined to be untrue, and a situation in which all of check items of the execution condition of a diagnosis are specified as requiring an automatic operation. A diagnosis operation in the third case is carried out in the same manner as that in the first case except that the operation omits the sequence (steps (c1) to (c4)) associated with a notice of "instruction text" for a manual operation because such a notice is not required.

### [Fourth Case]

The fourth case represents situations in which only a waiting time is required.

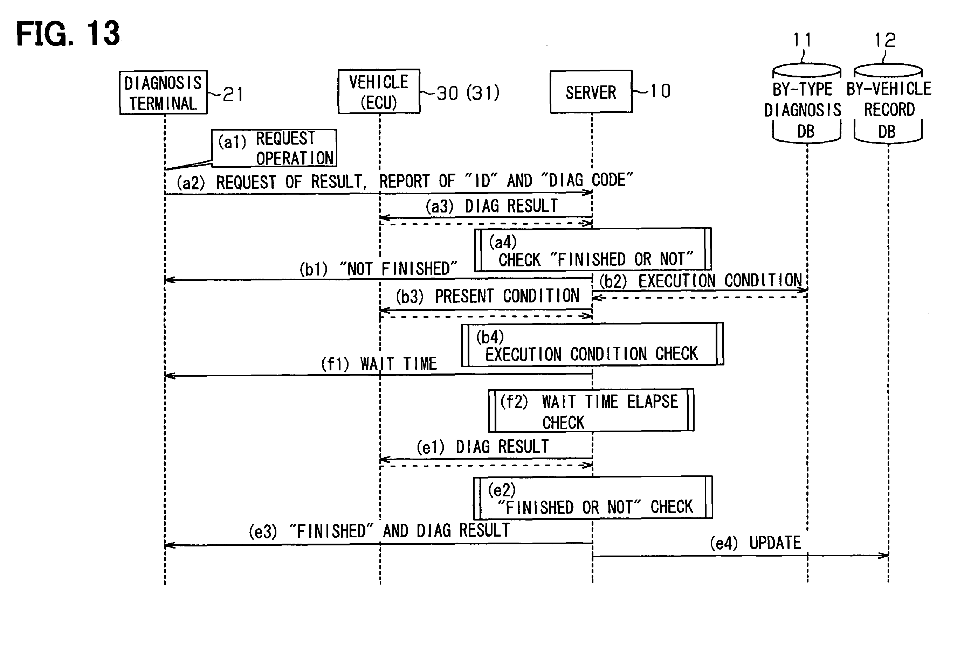

This sequence of diagnostic operations is shown in Fig. 13 and performed in a situation in which only a waiting time is required to finish a self-diagnosis or a situation in which a diagnosis itself has not been finished yet, although the condition for execution of the diagnosis has been satisfied. Some diagnoses do not immediately provide diagnosis results even though conditions for execution of the same have been satisfied just as in a situation in which a vehicle is determined to be properly operating or not based on the transition of the value of a sensor within a certain period of time (the rate of change in the sensor value or the width of change in the sensor value).

In a situation as described above, the repair person can finish the diagnosis operation only by waiting until the diagnosis is finished and results of the same are recorded in the ECU 31. In case of the vehicle diagnosis system of this case, the repair person is notified of the time to wait until the diagnosis is finished in such a situation. In the case of a diagnosis requiring a waiting time during the period from the beginning of the diagnosis (the fulfillment of the condition for execution) and the end of the diagnosis (the recording of diagnostic results) as described above, information on such a waiting time is included in the information on the execution condition of the relevant item in the by-type execution condition master data table M3.

A diagnosis operation in the fourth case is carried out in the same manner as that in the first case up to the determination on fulfillment of the execution condition (b4). In the fourth case, the checking on whether the diagnosis has been finished or not (a4) gives the answer "diagnosis has not been finished", whereas the determination on the fulfillment of the execution condition (b4) gives the answer "execution condition is satisfied".

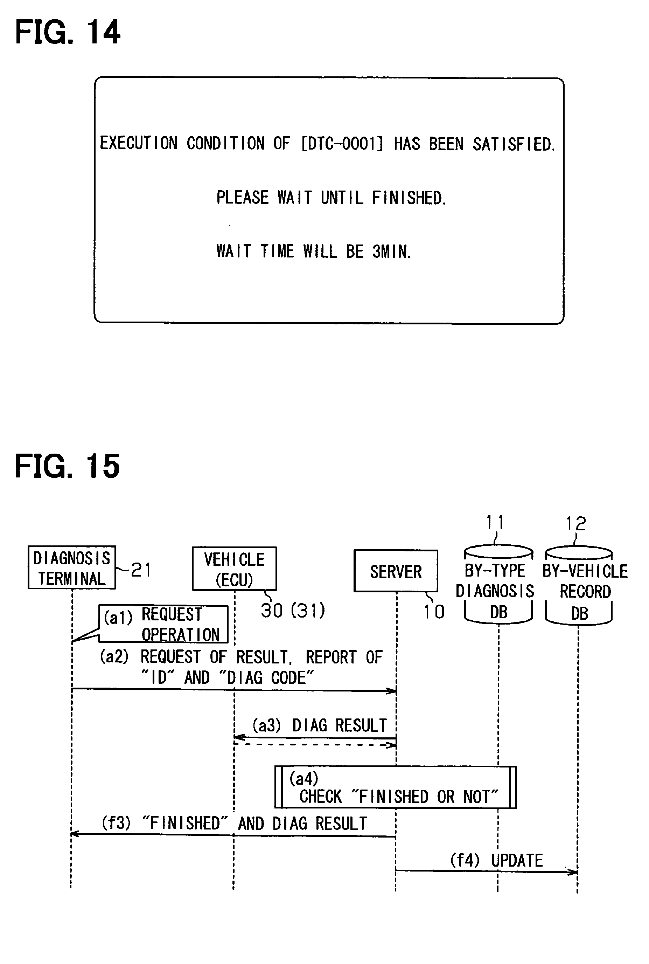

At this time, the management server 10 notifies the diagnosis terminal 21 of the waiting time between the fulfillment of the execution condition and the completion of the diagnosis (f1) after it is determined at step (b4) that "the execution condition is satisfied". Upon receipt of this notice, the monitor 21a of the diagnosis terminal 21 displays a screen indicating that there is a waiting time before the diagnosis is finished and advising the time to wait until the diagnosis is finished. An example of the screen displayed on the diagnosis terminal 21 at this time is shown in Fig. 14.

Thereafter, the management server 10 checks whether the waiting time has passed (f2) based on elapsed time after the determination on the fulfillment of the execution condition at step b4. When the waiting time has passed, the server reads the diagnosis results from the ECU 31 (e1) to check whether the diagnosis has been finished or not again (e2). If the diagnosis has been finished, the management server 10 notifies the diagnosis terminal 21 of the diagnosis results thus read (e3), updates the diagnosis record information of the vehicle in the by-vehicle diagnosis record database 12 (e4), and terminates the diagnosis operation.

When there must be a waiting time before the completion of a diagnosis in situations like the first to third cases (Figs. 7A, 7B to Fig. 12) in which the diagnosis operation involves vehicle operations, the above-described sequence of steps (f1 and f2) is carried out after the management server 10 is notified of the completion of all vehicle operations required to satisfy the execution condition, and the repair person is notified of the waiting time.

### [Fifth Case]

The fifth case represents situations in which a diagnosis has already been finished when a request for diagnosis results is made.

This sequence of diagnosis operations is shown in Fig. 15 and performed in a situation in which a diagnosis has already been finished (i.e., diagnosis results have already been recorded) when a request for diagnosis results is made. In the fifth case as thus described, at step (a4) performed immediately after the beginning of a diagnosis to check whether the diagnosis has already been finished or not, it is determined that "the diagnosis is finished". In this case, the management server 10 directly proceeds to the steps of notifying the diagnosis terminal 21 of diagnosis results that the server has read (f3) and updating the diagnosis record information of the relevant vehicle in the by-vehicle diagnosis record database 12 (f4), and the server terminates the diagnosis operation.

A detailed description will now be made on processes performed by each of the management server 10, the diagnosis terminal 21, and the vehicle 30 (ECU 31) when results of the self-diagnosis are read using the vehicle diagnosis system of the present embodiment as thus described.

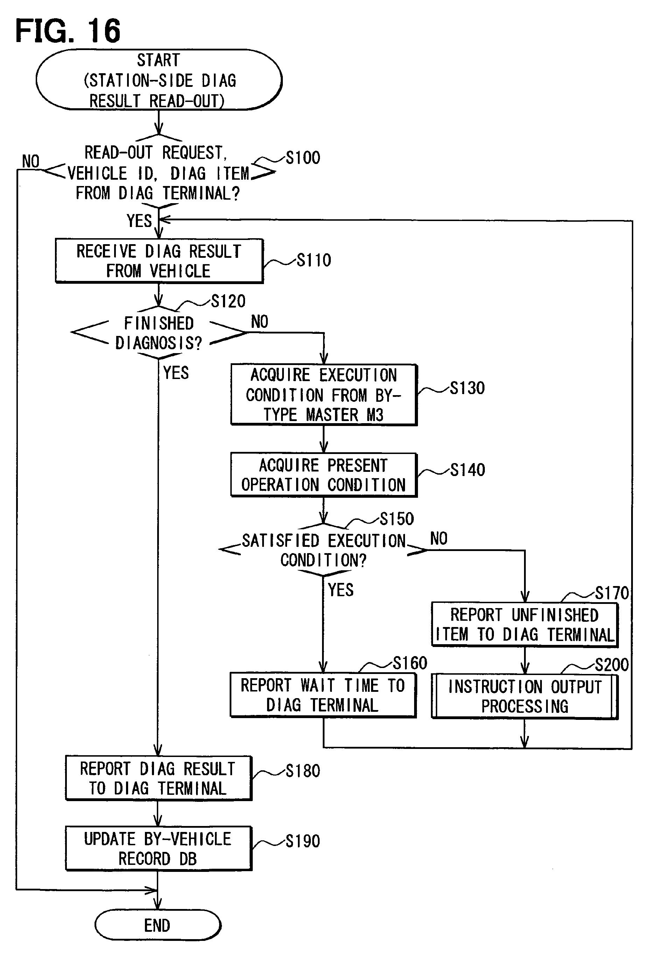

First, processes at the management server 10 will be described with reference to Fig. 16, which shows a station-side diagnosis results readout routine executed by the management server 10. The management server 10 periodically repeats the execution of the processes in this routine. Each time the series of processes is started, the server 10 checks whether a notice of a request for readout of self-diagnosis results has been received from the diagnosis terminal 21 or not (S100), and executes the processes at step S110 and subsequent steps if the notice has been received (if YES).

When a notice of "a request for readout of self-diagnosis results" is received, the management server 10 first accesses the ECU 31 of the vehicle 30 associated with the advised "vehicle ID" at step S110 and reads data of the diagnosis results associated with the "diagnosis code" advised. At a subsequent step S120, the management server 10 checks whether the diagnosis has been finished or not based on whether there is a record of diagnosis results or not. If it is determined that the diagnosis has been finished (S120: YES), the management server 10 proceeds to the process at step S180 and notifies or reports the diagnosis terminal 21 of the fact that "the diagnosis is finished" and the diagnosis results acquired at step S180. Further, the management server 10 updates the diagnosis record information of the relevant vehicle in the by-vehicle diagnosis record database 12 according to the diagnosis results at step S190, the series of processes in this cycle of the routine is thereafter terminated.

If the diagnosis has not been finished (S120: NO), the management server 10 acquires information on the conditions for execution of self-diagnoses of relevant vehicle type and items from the by-type execution condition master tables M3 at step S130. Then, the management server 10 acquires the present driving state of the vehicle from the ECU 31 at step S140 and checks whether the condition for execution of the diagnosis has been satisfied or not at a subsequent step S150.

If the execution condition has been satisfied (if YES), the management server 10 notifies the diagnosis terminal 21 of the fact that "the execution condition is satisfied" and "the waiting time (only when required)" at step S160 and thereafter returns to step S110 to check whether the diagnosis has been finished or not again. If the execution condition has not been satisfied (S150: NO), the management server 10 notifies the diagnosis terminal 21 of the fact the "the execution condition is not satisfied" and the check items which are untrue at step S170 and executes processes of an "instruction information output routine" at a subsequent step S200.

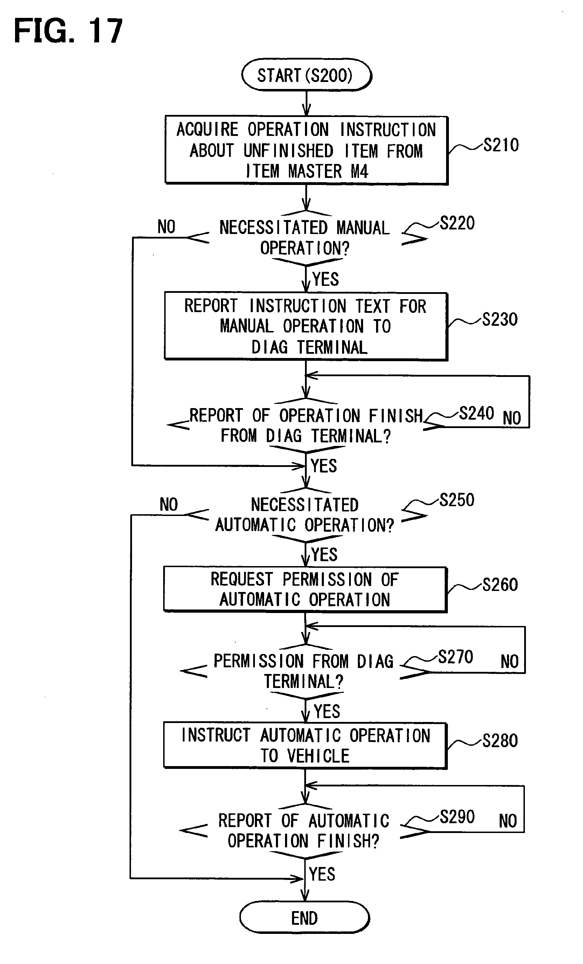

As shown in Fig. 17 showing the instruction information output routine at step S200, the management server 10 first acquires information on an instruction for a vehicle operation required for each of the untrue check items to become true ("an instruction text" for a manual operation or "an instruction to the vehicle" for an automatic operation) from the check item master data table M4.

If no manual operation is required (S220: NO), the management server 10 skips subsequent steps S230 and S240 to proceed to the process at step S250. If the manual operation is required (S220: YES), the management server 10 notifies the diagnosis terminal 21 of "the instruction text" for the manual operation at step S230. Then, the server 10 waits until a notice indicating "the operation is finished" is received from the diagnosis terminal 21 at step S240 and then proceeds to step S250.

At step S250, the management server 10 checks whether the automatic operation is required or not. The server 10 terminates the series of processes in this cycle of the routine if no automatic operation is required (NO), and proceeds to the process at step S260 if an automatic operation is required (S250: YES). The management server 10 requests the diagnosis terminal 21 to grant "permission for execution of an automatic operation" at step S260, and the server waits for an answer from the diagnosis terminal 21 at step S270. When a "permission" notice is received from the diagnosis terminal 21 (S270: YES), the management server 10 instructs the ECU 31 to execute the automatic operation at a subsequent step S280. Then, the management server 10 waits until a notice indicating that "the operation is finished" is received from the ECU 31 at step S290 and thereafter terminates the series of processes in this cycle of the routine. When the series of processes of this routine is terminated, the management server 10 returns to step S110 of the above-described station-side diagnosis results readout routine (Fig. 16) to check whether the diagnosis has been finished or not again.

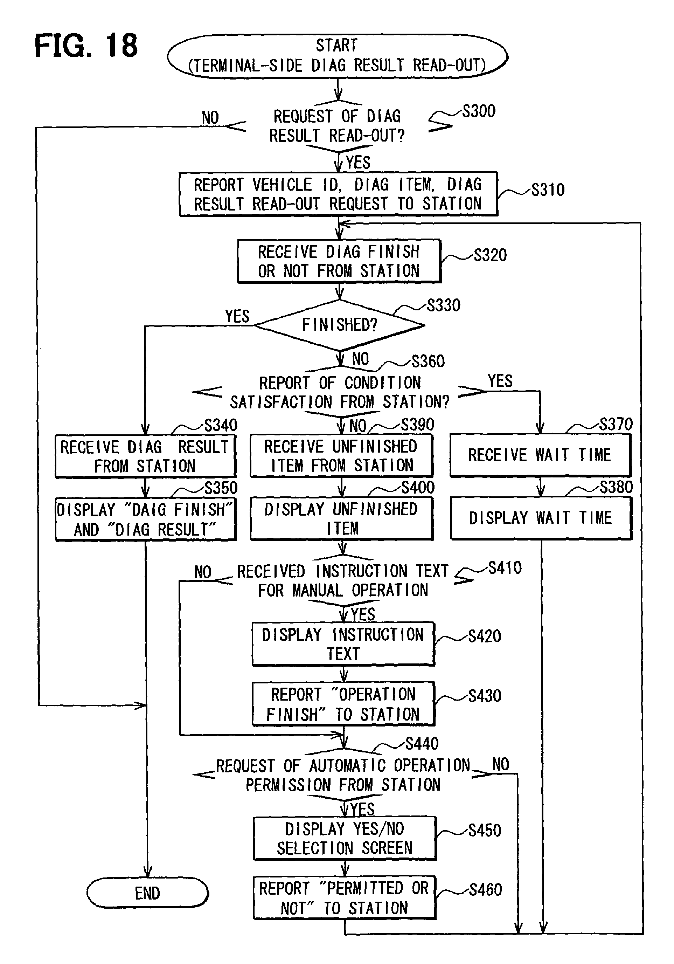

A description will now be made on processes performed by the diagnosis terminal 21 in response to a request for readout of diagnosis results with reference to Fig. 18 showing the terminal-side diagnosis results readout routine of the diagnosis terminal 21. The diagnosis terminal 21 periodically repeats the execution of processes in this routine. Each time this routine is started, the terminal 21 checks whether the repair person has made an operation to request readout of diagnosis results (S300). If such an operation is recognized (If YES), processes at step S310 and subsequent steps are executed.

When the operation to make the request for readout of diagnosis results has been performed, the diagnosis terminal 21 first notifies the management server 10 of the request for readout of diagnosis results and the diagnosis code specified therein at step S310. At this time, the diagnosis terminal 21 acquires the vehicle ID of the vehicle 30 of interest from the ECU 31 and notifies the management server 10 of the ID in addition to the above-mentioned information.

As described above, upon receipt of such a notice, the management server 10 checks whether the diagnosis has been finished or not (S120 in Fig. 16) and notifies the diagnosis terminal 21 of the result of the check. The diagnosis terminal 21 waits for a notice of the determination result at a subsequent step S320. When a notice indicating that the diagnosis is finished is received (S330: YES), the terminal 21 displays "diagnosis results" received from the management server 10 at step S340 on the monitor 21a thereof along with a message indicating that "the diagnosis is finished" (S350) and terminates the series of processes in this cycle of this routine.

When a notice indicating that the diagnosis is not finished is received (S330: NO), the diagnosis terminal 21 waits at step S360 until it is notified from the management server 10 of the result of checking on whether the execution condition for the diagnosis has been satisfied. When a notice indicating that the execution condition is satisfied is received (If YES), the diagnosis terminal 21 displays the waiting time until the completion of the diagnosis advised from the management server 10 on the monitor 21a thereof at step S370 along with a message indicating that the execution condition is satisfied (S380). Then, the diagnosis terminal 21 returns to the process at step S320 again to wait for a notice of the completion or incompletion of the diagnosis.

On the contrary, when a notice indicating that the execution condition is not satisfied is received (S360: NO), the diagnosis terminal 21 displays the check items which are untrue advised from the management server 10 at step S390 on the monitor 21a thereof along with a message indicating that "the execution condition is not satisfied" (S400). In this case, the diagnosis terminal 21 will be notified later from the management server 10 of "an instruction text" if a manual operation is required or "a request for permission for execution of an automatic operation" if the automatic operation is required.

When the manual operation is required or when "an instruction text" for a manual operation is advised from the management server 10 (S410: YES), the diagnosis terminal 21 displays "the instruction text" for a manual operation thus advised on the monitor 21a thereof at step S420. At this time, a screen for confirming the completion of the operation is displayed on the monitor 21a along with the text. Thereafter, the repair person finishes the operation and confirms the completion of the operation. Then, the diagnosis terminal 21 notifies the management server 10 that "the operation is finished" at step S430.

When an automatic operation is required or when a notice of a "request for permission for execution of an automatic operation" is received from the management server 10 (S440: YES), the diagnosis terminal 21 displays a screen for confirmation on whether execution of the automatic operation is permitted or not at step S450. At a subsequent step S460, the diagnosis terminal 21 notifies the management server 10 of the result of the selection by the repair person (whether the automatic operation is permitted or not).

After the above processes are performed, the diagnosis terminal 21 returns to the process at step S320 and waits for a notice of the completion or incompletion of the diagnosis from the management server 10 again.

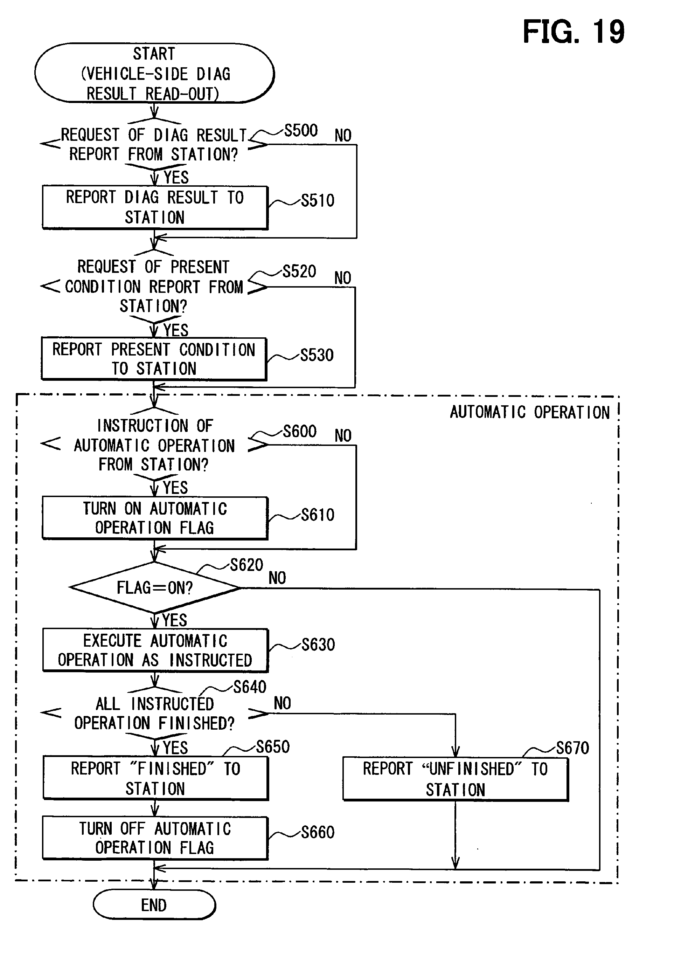

Finally, a description will be made on processes at the vehicle 30 included in the above sequence of diagnosis operations with reference to Fig. 19, which shows a "vehicle-side diagnosis results readout routine" executed by the ECU 31. The ECU 31 repeats the execution of the processes of this routine periodically (e.g., every 4 milliseconds). The ECU 31 performs the following processes in this routine.

In this routine, when there is a request for "readout and report of diagnosis results" from the management server 10 (S500: YES), the ECU 31 notifies the management server 10 of results of the diagnosis of the item specified in the request (S510). At this time, the ECU 31 transmits data in the storage area for diagnosis results of the item specified in the request to the management server 10 as it is regardless of whether diagnosis results are recorded in the area or not.

In this routine, when there is a request for a notice of "the present condition of driving of the vehicle" from the management server 10 (S520: YES), the ECU 31 notifies the management server 10 of the present value of the sensor, counter, or switch specified in the request (S530).

Further, when the ECU 31 receives instructions for automatic operations (S600: YES) of the vehicle 30 from the management server 10 in this routine, the ECU 31 executes the automatic operations of the vehicle 30 according to the instruction. At this time, processes for executing the automatic operation of the vehicle 30 according to the instructions is performed as follows. When the instruction for the automatic operation is received from the management server 10 (S600: YES), the ECU 31 first sets an execution flag of the automatic operation "ON" at step S610. When the execution flag is "ON" (S620: YES) the ECU 31 performs the automatic operation of the vehicle 30 based on the instructions given to the same. When all automatic operations instructed as thus described are finished (S640: YES), the ECU 31 notifies the management server 10 that "the operations have been finished" at step S650. The ECU sets the execution flag "OFF" at step S660 and terminates the series of processes in this cycle of the routine.

Even when any of the instructed automatic operations cannot be finished by the execution of this routine (S640: NO), the ECU 31 once terminates the series of processes in this cycle of the routine as it is while sending a notice indicating that "operation is not finished" to the management server 10 at step S670. Since the execution flag of the automatic operation is kept "ON" in such a case, the execution of the instructed automatic operation is handed over to the next cycle of the routine.

### (Execution of Active Test)

A description will now be made on a flow of diagnosis operations performed when there is a request for "the execution of an active test" in the vehicle diagnosis system. In the vehicle diagnosis system, even when the execution of the active test is requested, if the condition for execution of the test is not satisfied, information on an instruction for a vehicle operation required for an untrue check item to become true (an instruction text in the case of a manual operation or an instruction to the vehicle in the case of an automatic operation) is output in the same manner as in the case of a request for readout of diagnosis results as described above.

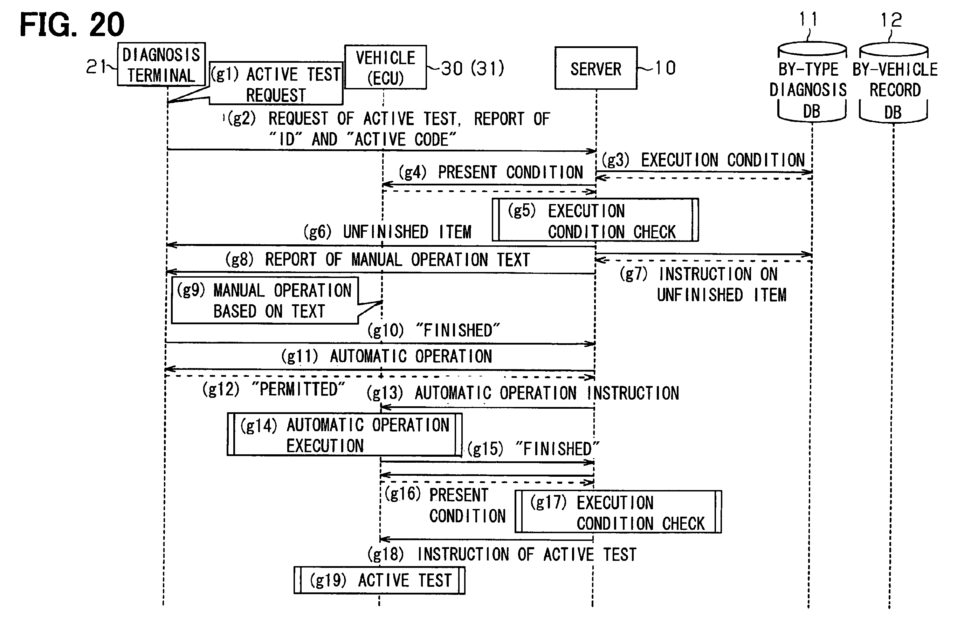

An example of a sequence of diagnosis operations performed when the execution of an active test is requested is shown in Fig. 20, in which both of the manual and automatic operations of the vehicle 30 are required to execute an active test of the vehicle 30 or to satisfy the condition for execution of the test.

When the repair person operates the diagnosis terminal 21 to request "the execution of an active test" by specifying a diagnosis code (g1), the management server 10 is notified of the specified "active test code", the "vehicle ID" read from the ECU 31, and the "request for execution of the active test" (g2). Upon receipt of the notice, the management server 10 refers to the by-type diagnosis process database 11 to acquire information on the execution condition for the active test of the vehicle type and items associated with the "active test code" and "vehicle ID" thus advised (g3). The information on the execution condition acquired at this time includes instructions (control information) for causing the ECU 31 to execute the active test.

Subsequently, the management server 10 checks the type of control parameters to be used for checking whether the execution condition is satisfied or not from the execution condition information thus acquired. The server accesses the ECU 31 of the relevant vehicle 30 based on the advised "vehicle ID" to acquire the present values of the control parameters (g4). Then, the management server 10 checks whether the condition for execution of the active test is satisfied or not based on the acquired values (g5).

Referring to Fig. 20, it is determined that "the execution condition is not satisfied" in this case, and the management server 10 then notifies the diagnosis terminal 21 of the fact that "the execution condition is not satisfied" and of check items which are untrue (g6) to cause the terminal to display the information on the monitor 21a thereof. Further, the management server 10 acquires information on instructions for vehicle operations associated with the untrue check items from the check item master data table M4 (g7). The management server 10 outputs the information on instructions for vehicle operations required for the untrue check items to become true in the same manner as in the case of a request for readout of results of a self-diagnosis.

Specifically, the management server 10 notifies the diagnosis terminal 21 of the instruction text for a manual operation to be performed for a check item that is untrue (g8) to cause the terminal to display the text on the monitor 21a thereof. The repair person performs the required manual operation according to the instruction text (g9). When the operation is finished, the repair person operates the diagnosis terminal 21 to notify the management server 10 that "the operation is finished" (g10).

Then, the management server 10 notifies the diagnosis terminal 21 of a "request for permission for execution of an automatic operation" (g11). When a "permission" notice is returned from the diagnosis terminal 21 (g12), the management server 10 instructs the ECU 31 to execute the required automatic operation based on control information stored in the data entry "instruction to vehicle" of the check item master data table M4 (gl3). The ECU 31 executes the automatic operation of the vehicle 30 according to the instruction (gl4). When the operation is finished, the ECU notifies the management server 10 that "the operation is finished" (g15).

When all necessary vehicle operations are finished, the management server 10 acquires information on the present condition of driving of the vehicle from the ECU 31 (g16) to check whether the condition for execution of the active test is satisfied or not again (g17). If the execution condition is satisfied, the ECU 31 is instructed to execute the active test (g18). The ECU 31 executes the active test according to steps for execution specified in the instruction (g19).

As described above, when there is a request for execution of the active test, instructions for vehicle operations required to finish the diagnosis are given in the same manner as in the case of the request for readout of results of a self-diagnosis. More specifically, instructions for vehicle operations required for satisfying the execution condition of the active test and an instruction for execution of the active test are given. Therefore, the repair person can satisfy the execution condition to initiate the active test only by operating the vehicle 30 according to the instruction text displayed on the monitor 21a of the diagnosis terminal 21 and operating the diagnosis terminal 21 to permit the ECU 31 to execute required vehicle operations automatically.

The following advantages can be provided by vehicle diagnosis system of the present embodiment.
(1) In the vehicle diagnosis system, the by-type diagnosis process database 11 for storing information on instructions for vehicle operations required for finishing the diagnosis (instruction texts for manual operations and instructions for automatic operations) is provided at the remote management station C outside vehicles 30. The management server 10 acquires the instruction information from the by-type diagnosis process database 11 and outputs the information to the diagnosis terminal 21 or the vehicle 30 (ECU 31). Therefore, instructions for vehicle operations required to finish the diagnosis can be provided without any increase in the stage capacity of the ECU 31, and a vehicle diagnosis operation can be facilitated.
(2) Instruction texts for vehicle operations required to finish a diagnosis are stored in the by-type diagnosis process database 11, and the instruction texts are displayed on a diagnosis terminal 21 as occasion demands. Therefore, the repair person can be properly notified of necessary vehicle operations.
(3) Control information for instructing steps of vehicle operations required to finish a diagnosis is stored in the by-type diagnosis process database 11, and the vehicle is instructed to execute operations based on the control information as occasion demands. Therefore, necessary vehicle operations can be properly and automatically executed. Such automatic execution of vehicle operations is not enabled without permission of a repair person, and the repair person is notified when such automatic execution of vehicle operations is finished. Thus, the repair person can have accurate understanding of the progress of a diagnosis.
(4) When there must be a waiting time between the completion of a vehicle operation based on an instruction included in instruction information notified as described and the output of diagnosis results, information on the waiting time is advised when the completion of the vehicle operation is confirmed. Therefore, the repair person can have accurate understanding of the progress of the diagnosis in such a case.
(5) The by-type diagnosis process database 11 and the management server 10 are provided at the remote management station C, and instruction information is distributed from the station to diagnosis terminals 21 and vehicles 30 at various repair shops 20 as occasion demands. Therefore, centralized management of information can be carried out, and the information can be easily and quickly updated to accommodate addition of vehicle types and specification changes. As a result, the configuration of the diagnosis terminals 21 provided at the various repair shops 20 can be simplified accordingly, which is also advantageous in that the equipment cost of the system as a whole including costs incurred at the repair shops 20 can be kept low.
(6) Since the management server 10 is connected to the diagnosis terminal 21 at various repair shops 20 through internet 14, an instruction for a vehicle operation can be easily provided to a repair shop 20 in a remote location.
(7) The management server 10 can be directly connected to a vehicle 30 through the cellular phone line 13, and the condition of driving of the vehicle 30 can be directly acquired from the same. It is therefore possible to provide an instruction for a vehicle operation more properly in accordance with each change in the condition of driving of the vehicle 30
(8) It is checked whether a diagnosis has been finished or not based on whether there is a record of diagnostic results in the ECU 31, and instruction information is output provided that the diagnosis has not been finished. Therefore, when no further vehicle operation is required, output of information on an instruction for an unnecessary vehicle operation can be avoided.
(9) Instruction information is output provided that the condition for execution of the diagnosis has been satisfied, and it is checked whether each of check items forming the condition for execution of the diagnosis is true or not. Since information on instructions for vehicle operations is output only for check items which are untrue, vehicle operations can be instructed properly without unnecessary instructions.
(10) When it is known that the diagnosis has not been finished and that the condition for execution of the diagnosis has been satisfied, the instruction information is output to provide the instruction for waiting until the diagnosis is finished. In addition, the waiting time to be spent until the diagnosis is finished is advised in such a case. Therefore, an instruction can be properly given to allow the progress of the diagnosis to be understood even in a situation as described above.
(11) Instruction information for instructing steps for vehicle operations associated with execution of the active test is stored in the by-type diagnosis process database 11 along with information on the condition for execution of the active test. The vehicle 30 is instructed to execute the active test based on the instruction information when it is confirmed that the execution condition has been satisfied. When the execution condition for the active test has not been satisfied, information on instructions for vehicle operations required to satisfy the condition is output. Therefore, the active test can be also easily executed by instructing necessary vehicle operations.
(12) The repair person is notified of the state of each of check items forming the execution condition of the diagnosis based on the result of checking on whether the item is true or untrue. Thus, the repair person can easily understand the status of the vehicle.
(13) The by-type diagnosis process database 11 includes the by-type execution condition master data table M3 for storing information on each type of check items forming the execution condition for the diagnosis, the information being stored for each item of the diagnosis. The database also includes the check item master data table M4 for storing information on a requirement for each check item to become true and information on the instruction for a vehicle operation required for the check item to become true. Some types of check items may be commonly included in check items forming the conditions for execution of different items of diagnosis. Therefore, the above configuration of the by-type diagnosis process database 11 allows information to be efficiently stored.
(14) The by-vehicle diagnosis record database 12 is provided for storing the by-vehicle diagnosis record information which is information on the state of maintenance of each vehicle, and records of diagnosis results output from each vehicle 30 are stored in the by-vehicle diagnosis record database 12. Thus, information useful for vehicle diagnosis can be provided. Statistics on the occurrences of each type of failure can be collected for each vehicle type, which allows a problem of a vehicle to be more quickly and properly discovered and solved.

The above vehicle diagnosis system of the present embodiment may be implemented with modifications as described below.

In the above embodiment, the by-type diagnosis process database 11 has a data structure including four types of data tables, i.e., the vehicle ID/vehicle type association table M1, the by-type specification master data table M2, the by-type execution condition master data table M3, and the check item master data table M4. The by-type diagnosis process database 11 may employ a data structure different from the structure described above as long as it allows the acquisition of information on instructions for vehicle operations required to finish a vehicle diagnosis.

The by-vehicle diagnosis record database 12 may be deleted when it is required only to provide instructions for vehicle operations required to finish the diagnosis. Similarly, the by-type specification master data table M2 in the by-type diagnosis process database 11 may be deleted.

Vehicle type codes may be recorded in vehicles 30, and the vehicle type codes may be read by diagnosis terminals 21 and advised to the management server 10. In this case, vehicle operations appropriate for the type of a vehicle to be diagnosed can be instructed even in a configuration without the vehicle ID/vehicle type association table M1.

Although the management server 10 outputs information on instructions for vehicle operations only for check items which are untrue in the above embodiment, information on vehicle instructions may alternatively be output for all check items forming the execution condition for a diagnosis regardless of whether the items are true or not. In such a case, instructions will be given to execute unnecessary vehicle operations associated with check items which have already been found true. A diagnosis can be still finished by executing vehicle operations according to such instructions even though the process involves unnecessary operations.

In the above embodiment, when there is a waiting time between the end of all required vehicle operations and the completion of the diagnosis, the repair person is notified of the waiting time. Such notification may be simplified. For example, a notice may indicate only that there is a waiting time without specifying the length of the waiting time. In this case, since the repair person can understand that no further operation is required, the understanding of the progress of the diagnosis is made easier. Alternatively, a notice of a waiting time may be omitted when there is little need for such a notice just as in the case of a not so long waiting time.

In the above embodiment, processes associated with the acquisition and output of instruction information from the by-type diagnosis process database 11 are performed by the management server 10 provided at the remote management station C. Alternatively, the vehicle diagnosis system may be configured such that those processes are performed by the diagnosis terminals 21 at the repair shops 20. In such a case, the diagnosis terminal 21 serves as the instruction information output unit.

In the above embodiment, separate instructions are given to perform the vehicle operation required to make each check item true depending on whether the operation is manual or automatic. If possible, all vehicle operations required to make check items true may be automatically performed. Alternatively, all vehicle operations required to make check items true may be manually performed.

Although an instruction text for a manual operation required to finish a diagnosis is displayed on the diagnosis terminal 21 in the above embodiment, such a text may be displayed on other interfaces, e.g., on-vehicle display apparatus having an information display function such as a car navigation system.

A notice of a vehicle operation required to finish a diagnosis may be provided to a repair person using notification methods other than displaying an instruction text, e.g., methods utilizing images, moving pictures, and sounds.

In the above embodiment, the management server 10 acquires various types of information on the vehicle 30 (e.g., a record of diagnostic results and the present driving state of the vehicle) through the cellular phone line 13. Alternatively, such vehicle information may be acquired through the diagnosis terminal 21 and the internet 14.

In the above embodiment, the management server 10 communicates with the vehicle 30 using the cellular phone line 13 and communicates with the diagnosis terminal 21 through the internet 14. Such communication may alternatively be made through a communication network different from them.

### (Second Embodiment)

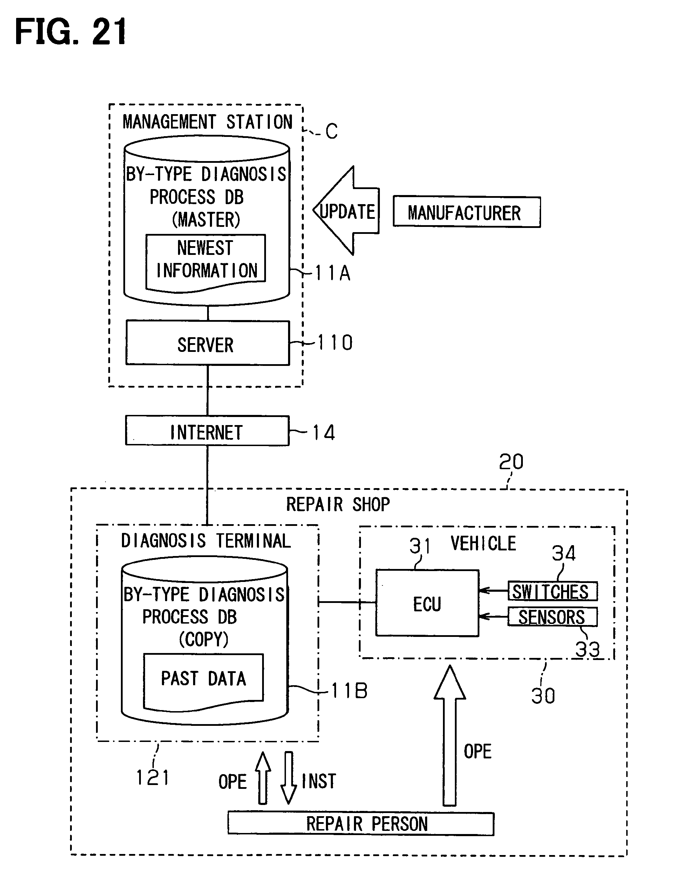

A second embodiment of a vehicle diagnosis system is differentiated from the first embodiment as shown in Fig. 21.

In the second embodiment, the vehicle diagnosis system is configured such that each repair shop 20 can finish vehicle diagnosis operations independently without accessing the remote management station C, while in the first embodiment, the by-type diagnosis process database 11 for storing information on instructions for vehicle operations required to finish the diagnosis and the management server 10 for acquiring the instruction information from the database 11 and outputting the same are provided at the remote management station C, and vehicle diagnosis operations performed at each of repair shops 20 in various locations are managed at the remote management station C in a centralized manner.

As shown in Fig. 21, a diagnosis terminal 121 is provided at the repair shop 20 and includes a by-type diagnosis process database 11B. The diagnosis process database 11B provided in the diagnosis terminal 121 is basically the same as the by-type diagnosis process database 11 (Fig. 1) provided at the remote management station C in the first embodiment.

The diagnosis terminal 121 performs processes associated with the output of instruction information in a manner similar to that of the management server 10 (Fig. 1) in the vehicle diagnosis system of the first embodiment. That is, the diagnosis terminal 121 serves as the instruction information output unit. Specifically, the diagnosis terminal 121 reads information on a record of diagnosis results and the present condition of driving of a vehicle directly from the ECU 31 to check whether a diagnosis has been finished or not or to check whether the execution condition for the diagnosis has been satisfied or not. Then, the diagnosis terminal 121 acquires information on an instruction for a check item which is untrue from the diagnosis process database 11B and outputs an instruction text to a display screen of itself or gives an instruction to the ECU 31.

Information stored in the diagnosis process database 11B at each repair shop 20 may have to be updated when there is addition of new vehicle types or specification changes. In this vehicle diagnosis system, such information updates are made in a manner as described below.

Each diagnosis terminal 121 provided at various repair shops 20 is connected to the management server 110 at the remote management station C through internet 14. The by-type diagnosis process database 11A is connected to the management server 110. The diagnosis process database 11A serves as a master of the diagnosis process databases 11B, and the diagnosis process databases 11B at the repair shops 20 are copies of the master. Information in the diagnosis process database (master) 11A at the remote management station C is updated by vehicle manufacturers as occasion demands.

The diagnosis terminal 121 at each repair shop 20 periodically accesses the management server 110 to check the information in the diagnosis process database 11B of itself against the information in the diagnosis process database 11A at the remote management station C. When the diagnosis terminal 121 is notified that the information at the remote management station C has been updated, the terminal 121 updates the information in the diagnosis process database 11B of itself accordingly. That is, the information in the diagnosis process database 11B at each repair shop 20 is kept updated through distribution of information over the network.

In the vehicle diagnosis system of the second embodiment, it is also possible to facilitate the vehicle diagnosis operation by instructing vehicle operations required to finish the diagnosis without any increase in the storage capacity of the ECU 31. Further, since the in formation in the diagnosis process database 11B at each repair shop 20 is updated through distribution of information over the network, the information can be relatively easily synchronized between the multiplicity of diagnosis databases 11B provided at the respective repair shops 20.

When the frequency (number of times) of updates of the diagnosis process database 11A is not so high, the information in the diagnosis process database 11B may be updated using a recording medium which can be mounted and removed in and from the diagnosis terminal 121 (e.g., a CD-ROM, a DVD-ROM, or a portable flash memory). In such a case, a vehicle manufacture who has added a new vehicle type produces recording media having updated information in the diagnosis database 11A recorded therein and distributes the media to the repair shops 20. At the repair shops 20, the distributed media are mounted in the diagnosis terminals 121, and the updated information is read to update the diagnosis process databases 11B.

## Claims

1. A vehicle diagnosis system for diagnosing a vehicle (30) by a diagnosis terminal (21, 121) connectable to the vehicle, the system comprising:
a diagnosis process database (11, 11A, 11B) provided outside the vehicle and configured to have information on an instruction for a vehicle operation required to finish the diagnosis stored therein; and
an instruction information output unit (10, 121) configured to acquire the instruction information from the diagnosis process database and output the information.

2. A vehicle diagnosis system according to Claim 1, wherein:
the vehicle diagnosis system checks whether a self-diagnosis executed at the vehicle has been finished, and outputs a result of checking.

3. A vehicle diagnosis system according to Claim 1 or 2, wherein:
the vehicle diagnosis system acquires a result of a self-diagnosis executed at the vehicle and outputs the result.

4. A vehicle diagnosis system according to any one of Claims 1 to 3, wherein:
the instruction information is used to notify a repair person of the vehicle operation required to finish the diagnosis.

5. A vehicle diagnosis system according to Claim 4, wherein:
the instruction information includes an instruction text for explaining steps of the vehicle operation.

6. A vehicle diagnosis system according to Claim 4 or 5, wherein:
a notification is carried out by displaying the instruction information on the diagnosis terminal (21).

7. A vehicle diagnosis system according to Claim 4 or 5, wherein:
a notification is carried out by displaying the instruction information on an on-vehicle display apparatus.

8. A vehicle diagnosis system according to any one of Claims 1 to 7, wherein:
the instruction information is used to instruct the vehicle (30) to automatically execute the vehicle operation required to finish the diagnosis.

9. A vehicle diagnosis system according to Claim 8, wherein:
the instruction information includes control information for instructing the vehicle of steps of the vehicle operation required to finish the diagnosis.

10. A vehicle diagnosis system according to Claim 8 or 9, wherein:
an automatic execution of the vehicle operation is started on condition that a predetermined operation indicating permission for the execution is performed.

11. A vehicle diagnosis system according to Claim 8 or 9, wherein:
a start of the automatic execution of the vehicle operation is suspended until the predetermined operation indicating permission for the execution is performed.

12. A vehicle diagnosis system according to any one of Claims 8 to 11, wherein:
a finish of the diagnosis is notified to the repair person when the automatic execution of the vehicle operation is finished.

13. A vehicle diagnosis system according to any one of Claims 1 to 12, wherein:
information on a waiting time since the completion of the vehicle operation based on the instruction included in the instruction information until the output of a result of the diagnosis is also stored in the diagnosis process database; and
the instruction information output unit (10, 121) provides a notice of the waiting time when it is confirmed that the vehicle operation is finished.

14. A vehicle diagnosis system according to any one of Claims 1 to 13, wherein:
the diagnosis process database (11, 11A, 11B) is provided at each of repair shops (20) and loaded to the diagnosis terminal (21) connected to the vehicle when the vehicle is diagnosed.

15. A vehicle diagnosis system according to Claim 14, wherein:
the instruction information stored in the diagnosis process database (11, 11A, 11B) is distributed to each diagnosis terminal at the repair shops using a storage media which is mountable and removable in and from the diagnosis terminals.

16. A vehicle diagnosis system according to Claim 14, wherein:
the instruction information stored in the diagnosis process database (11, 11A, 11B) is distributed to each diagnosis terminal at the repair shops through a communication network (14).

17. A vehicle diagnosis system according to any one of Claims 1 to 13, wherein:
the diagnosis process database (11, 11A, 11B) is provided at a management station (C) connected to each diagnosis terminal at the repair shops.

18. A vehicle diagnosis system according to Claim 17, wherein:
the instruction information output unit (10) is provided at the management station.

19. A vehicle diagnosis system according to Claim 17 or 18, wherein:
the management station (C) is connected to the vehicle through a wireless line (13).

20. A vehicle diagnosis system according to Claim 19, wherein:
the wireless line (13) is a cellular phone line (13).

21. A vehicle diagnosis system according to any one of Claims 1 to 20, wherein:
the instruction information output unit (10, 121) outputs the instruction information on condition that the diagnosis has not been finished.

22. A vehicle diagnosis system according to Claim 21, wherein:
the instruction information output unit (10, 121) accesses a storage area for the result of the diagnosis of the vehicle and checks whether the diagnosis has been finished based on whether there is a record of the diagnosis result.

23. A vehicle diagnosis system according to any one of Claims 1 to 22, wherein:
the diagnosis process database (11, 11A, 11B) further stores information on a condition for execution of the diagnosis; and
the instruction information output unit (10, 121) acquires a present value of a condition of driving from the vehicle to check whether the execution condition for the diagnosis is satisfied and outputs the instruction information based on the result of the check.

24. A vehicle diagnosis system according to Claim 23, wherein:
the instruction information output unit (10, 121) outputs the instruction information on condition that the execution condition for the diagnosis is unsatisfied.

25. A vehicle diagnosis system according to Claim 24, wherein:
the instruction information output unit (10, 121) outputs instruction information for instructing to wait until the diagnosis is finished when the execution condition for the diagnosis is satisfied and it is confirmed that the diagnosis has not been finished yet.

26. A vehicle diagnosis system according to Claim 25, wherein:
the instruction information output unit (10, 121) also outputs information on a waiting time when outputting the information on the instruction to wait.

27. A vehicle diagnosis system according to any one of Claims 23 to 26, wherein:
the diagnosis process database (11, 11A, 11B) further stores instruction information for instructing steps for executing the diagnosis; and
the instruction information output unit (10, 121) instructs the vehicle to execute the diagnosis based on the instruction information in response to confirmation of fulfillment of the execution condition for the diagnosis.

28. A vehicle diagnosis system according to any one of Claims 23 to 27, wherein:
the instruction information output unit (10, 121) finds any unexecuted operation among a series of vehicle operations required to finish the diagnosis based on the present value of the condition of driving of the vehicle and outputs the instruction information only for the unexecuted operation.

29. A vehicle diagnosis system according to any one of Claims 23 to 27, wherein:
the instruction information output unit (10, 121) finds any unexecuted operation among a series of vehicle operations required to finish the diagnosis based on the present value of the condition of driving of the vehicle and outputs the instruction information while allowing the unexecuted operation to be discriminated from an operation which has already been executed.

30. A vehicle diagnosis system according to any one of Claims 23 to 29, wherein:
the information on the execution condition includes information on a requirement for each of check items forming the execution condition for the diagnosis to become true.

31. A vehicle diagnosis system according to Claim 30, wherein:
the diagnosis process database (11, 11A, 11B) stores information on an instruction for a vehicle operation required for each of the check items to become true.

32. A vehicle diagnosis system according to Claim 31, wherein:
the instruction information for the vehicle operation for each of the check items includes information specifying the vehicle operation to be either manual or automatic operation.

33. A vehicle diagnosis system according to Claim 32, wherein:
the instruction information output unit (10, 121) outputs the instruction information to destinations sorted according to the specification of manual and automatic operations.

34. A vehicle diagnosis system according to any one of Claims 31 to 33, wherein:
the instruction information output unit (10, 121) checks whether each of the check items forming the execution condition for the diagnosis is true based on the present value of the condition of driving acquired from the vehicle and outputs the instruction information according to the result of the check.

35. A vehicle diagnosis system according to Claim 34, wherein:
the instruction information output unit (10, 121) outputs the instruction information only to a check item which is determined to be untrue.

36. A vehicle diagnosis system according to Claim 34 or 35, wherein:
the instruction information output unit (10, 121) notifies the repair person of the state of each check item based on the result of the check on whether the item is true or not.

37. A vehicle diagnosis system according to any one of Claims 31 to 36, wherein the diagnosis process database (11, 11A, 11B) includes:
an execution condition master data table for storing information on each type of check items forming the execution condition for the diagnosis, the information being stored for each item of the diagnosis; and
a check item master data table for storing information on a requirement for each type of the check items to become true and information on an instruction for a vehicle operation required for the check item to become true.

38. A vehicle diagnosis system according to Claims 37, wherein:
the execution condition master data table is provided for each vehicle type.

39. A vehicle diagnosis system according to any one of Claims 1 to 38, further comprising:
a by-vehicle diagnosis record database (12) for storing information on a state of maintenance of each vehicle.

40. A vehicle diagnosis system according to Claim 39, wherein:
the by-vehicle diagnosis record database (12) stores a history of output of diagnosis results.
